# EUROPÄISCHE PATENTSCHRIFT

(11) **EP 1 763 391 B1**
(45) Veröffentlichungstag und Bekanntmachung des Hinweises auf die Patenterteilung: **26.03.2008**
(21) Anmeldenummer: 05761228.5
(22) Anmeldetag: 01.07.2005
(51) Int. Cl.: B01D 33/073, B23Q 11/10, B23Q 11/00

(54) **VORRICHTUNG ZUR AUFNAHME UND TRENNUNG VON AN WERKZEUGMASCHINEN ANFALLENDEN SPÄNEN UND KÜHLFLÜSSIGKEITEN**
DEVICE FOR HOLDING AND SEPARATING CHIPPINGS AND COOLING LIQUID ACCUMULATING ON MACHINE TOOLS
DISPOSITIF POUR RECUEILLIR ET SEPARER COPEAUX ET LIQUIDE DE REFROISSEMENT PROVENANT DE MACHINES OUTILS

(30) Priorität: 02.07.2004 DE 102004032334
(43) Veröffentlichungstag der Anmeldung: 21.03.2007
(73) Patentinhaber: Mayfran International B.V., 6370 AA Landgraaf (NL)
(72) Erfinder: KROONEN, Wiel, E., H., NL-6351 AT Bocholtz (NL); SIEBEN, Rene, M., NL-6133 XE Sittard (NL); SOUREN, Rimmond, H., B., NL-6231 JR Meersen (NL); WELTEN, Wilhelmus, J., C., NL- 6132 EG Sittard (NL)
(74) Vertreter: König, Werner
(86) Internationale Anmeldenummer: PCT/EP2005/007123
(87) Internationale Veröffentlichungsnummer: WO 2006/002950

(56) Entgegenhaltungen:
- EP-A- 1 053 825
- GB-A- 2 302 818
- US-A- 5 849 183
- PATENT ABSTRACTS OF JAPAN Bd. 2002, Nr. 08, 5. August 2002 (2002-08-05) & JP 2002 102608 A (ENSHU LTD), 9. April 2002 (2002-04-09)

## Beschreibung

Die Erfindung betrifft eine Vorrichtung zur Aufnahme und Trennung von an Werkzeugmaschinen anfallenden Spänen und Kühlflüssigkeit, wobei die Kühlflüssigkeit zum Wiedereinsatz zurückgeführt und die Späne abgeführt werden, mit einem Aufnahmetank zur Aufnahme der Späne und der Kühlflüssigkeit, einem sich an den Aufnahmetank anschließenden ansteigenden Führungsabschnitt, einem sich an den Führungsabschnitt anschließenden erhöhten Abgabeabschnitt, einem kettenartigen geschlossenen Transportelement, welches zumindest in dem die Späne und die Kühlflüssigkeit aufnehmenden Bereich sowie in dem Abgabeabschnitt über Umlenkelemente geführt ist, von denen mindestens eines mit einem Drehantrieb gekoppelt ist, und einer drehbar gelagerten Filtertrommel, welche mit dem Transportelement in Antriebsverbindung steht.

Eine derartige Vorrichtung ist aus der deutschen Patentanmeldung 102 23 290.3 bekannt. Ebenso ist eine ähnliche Vorrichtung in der GB 2 302 818 offenbart. Diese Schrift beschreibt eine Vorrichtung zur Aufnahme und Trennung von an Werkzeugmaschinen anfallenden Spänen und Kühlflüssigkeit mit einem rotierenden Trommelfilter. Dabei ist im unteren Bereich der Filtertrommel ein zu deren Achse parallel verlaufendes Einlassrohr ortsfest angeordnet, das sich zumindest über einen Teil der Länge der Filtertrommel erstreckt. Das genannte Einlassrohr ist wiederum mit einem Saugrohr verbunden, welches durch die Achse der Filtertrommel in diese eintritt und außerhalb mit einer Pumpe verbunden ist. Durch diese Anordnung kann nun gefilterte Flüssigkeit aus dem Inneren der Filtertrommel abgesaugt werden. Es ist weiter vorgesehen, einen Teil der abgesaugten gefilterten Flüssigkeit in die Trommel zurück zu führen und über Sprühdüsen im oberen Bereich der Trommel auf die Wandung aufzubringen, um damit außen anhaftende Rückstände abzuspülen.

Der Erfindung liegt die Aufgabe zu Grunde, eine gattungsgemäße Vorrichtung derartig weiter zu bilden, dass insbesondere der für die Vorrichtung insgesamt erforderliche Raumbedarf erheblich verringert wird.

Diese Aufgabe wird bei einer Vorrichtung der eingangs erwähnten Art dadurch gelöst, dass im unteren Bereich der Filtertrommel ein zu deren Achse parallel verlaufendes, umgekehrt rinnenförmiges Abdeckelement ortsfest angeordnet ist, das sich zumindest über einen Teil der Länge der Filtertrommel erstreckt, dass das Abdeckelement an seinem einen Ende mit einem Durchbruch in der einen Wandung des Trommelgehäuses dichtend kommuniziert und dass der Durchbruch an eine Saugleitung angeschlossen ist, die mit einem höher angeordneten Saugelement in Verbindung steht, welches in einen Sammeltank fördert.

Die in die Filtertrommel eingetretene und dabei gereinigte Kühlflüssigkeit wird durch einen Durchbruch in einer Seitenwand hindurchgeführt und dann über eine Saugleitung einer Pumpe zugeführt, von der die gereinigte Kühlflüssigkeit einem Sammeltank zugeleitet wird. Dieser Aufwärtstransport der gereinigten Kühlflüssigkeit verläuft also dicht neben einer Seitenwand des Trommelgehäuses und zum Teil auch oberhalb dieses Gehäuses, so dass die gesamte Standfläche der Vorrichtung sehr eng bemessen sein kann.

Erfindungsgemäß ist ferner vorgesehen, dass die Seitenwangen des Abdeckelements eng an die Innenfläche der Filtertrommel heranreichen, so dass der Raum unterhalb des Abdeckelements an seinen Seitenrändern zumindest teilweise eingegrenzt ist. Somit wirkt sich der von der Pumpe über die Saugleitung ausgeübte Saugdruck insbesondere in dem von dem Abdeckelement umschlossenen Bereich aus.

Weitere vorteilhafte Merkmale der Erfindung sind insbesondere in den Ansprüchen ausgeführt und durch die Beschreibung gestützt.

Nachfolgend wird eine Ausführungsform der erfindungsgemäßen Vorrichtung an Hand von Zeichnungen beschrieben.

Es zeigt:
- Fig. 1:: eine Seitenansicht auf eine Ausführungsform der erfindungsgemäßen Vorrichtung,
- Fig. 2: einen Querschnitt durch die Filtertrommel der Vorrichtung und
- Fig. 3: einen vertikalen Axialschnitt durch die Filtertrommel.

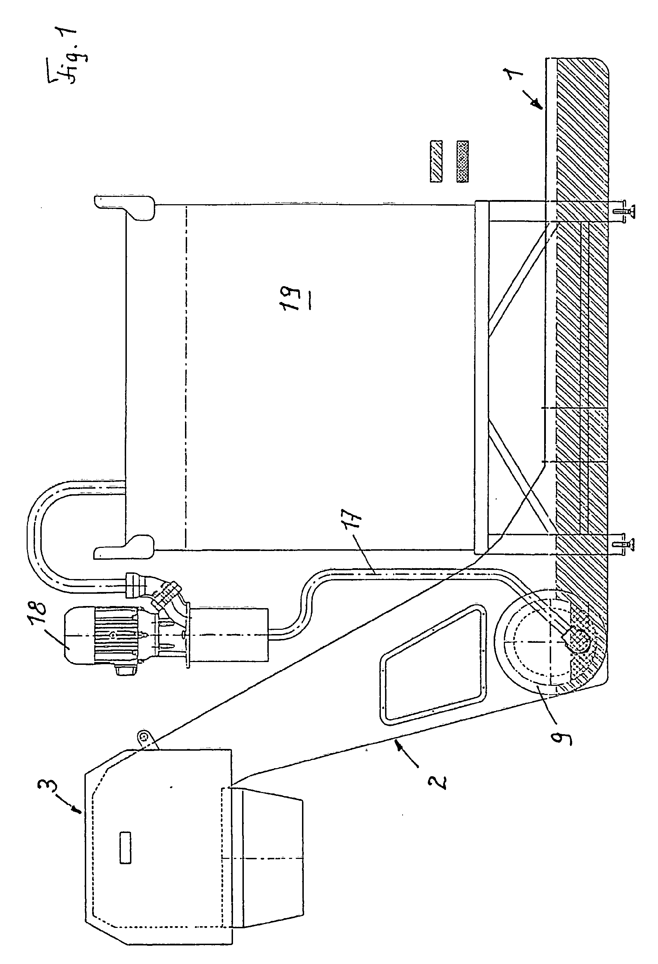

Die in Figur 1 schematisch dargestellte erfindungsgemäße Vorrichtung hat einen Aufnahmetank 1, der nach oben zumindest teilweise offen ist und an Werkzeugmaschinen anfallende Späne und Kühlflüssigkeit aufnimmt. An den Aufnahmetank 1 schließt sich ein ansteigender Führungsabschnitt 2 an, der in einen erhöhten Abgabeabschnitt 3 übergeht.

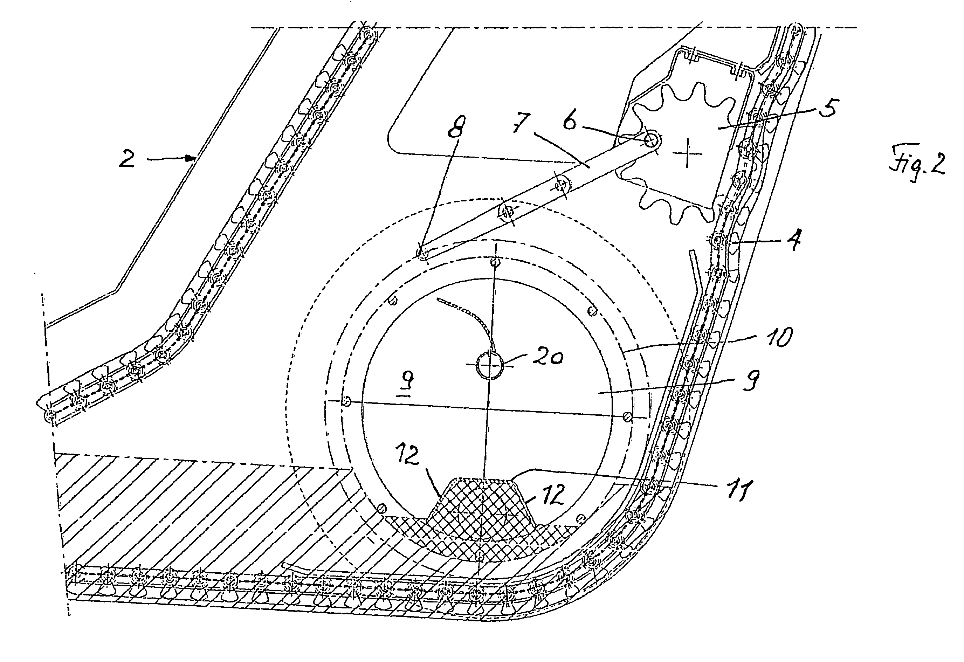

Zum Transport der Späne ist im gezeigten Ausführungsbeispiel eine in Figur 2 dargestellte Kratzerkette 4 vorgesehen, die über mehrere Umlenkelemente geführt ist und die Späne vom Aufnahmetank 1 bis zur Abwurfstelle im Abgabeabschnitt 3 transportiert.

In dem Ausführungsbeispiel gemäß Figur 2 greift ein Zahnrad 5 innenseitig in die Kratzerkette 4. Das Zahnrad 5 wird dadurch in Drehung versetzt und nimmt einen Kurbelzapfen 6 mit, der über eine Schubstange 7 an einem Klinkenrad 8 angreift und eine Filtertrommel 9 intermittierend oder mit wechselnden Drehzahlen antreibt.

Die Filtertrommel 9 ist an ihrem Umfang mit einer Bespannung 10 versehen (Fig. 2), welche siebartig auf die in ihrem unteren Bereich an ihr vorbei geführte Flüssigkeit wirkt und somit gefilterte und damit vorgereinigte Flüssigkeit in das Innere der Filtertrommel 9 eintreten lässt. Im unteren Bereich der Filtertrommel 9 innerhalb dieser Trommel ist mittig ein Abdeckelement 11 vorgesehen, das umgekehrt trogartig ausgebildet ist und dessen seitliche Wangen 12 also nach unten in Richtung auf die Innenfläche 13 der inneren Umrandung der Filtertrommel 9 hin voneinander weg geneigt verlaufen.

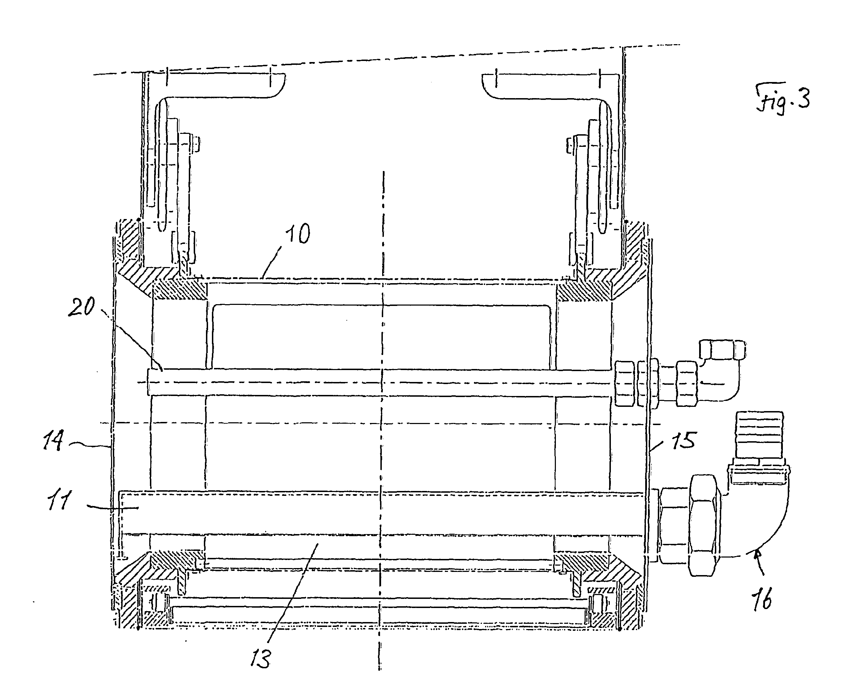

Das Abdeckelement 11 ist an seinem in Figur 3 links liegenden Ende an der Wandung 14 ortsfest abgestützt und verläuft durch die gesamte Filtertrommel 9 hindurch bis zur gegenüberliegenden Gehäusewand 15. Es kann aber auch zweckmäßig sein, das Abdeckelement 11 an seinem links liegenden Ende mit Abstand zur von der linken Seitenwand enden zu lassen. In der rechten Gehäusewand 15 ist jedenfalls eine Durchbrechung vorgesehen, die über Schrauben und Anschlussstücke 16 eine dichte Verbindung zwischen dem Bereich unterhalb des Abdeckelements 11 einerseits und einem Saugrohr 17 andererseits bildet (Fig. 3). Dieses Saugrohr 17 ist außerhalb der Filtertrommel 9 und nahe der Trommelwand aufwärts zu einer Saugpumpe 18 hin geführt, die ihrerseits das so gereinigte Kühlwasser in einen Sammeltank 19 leitet, der über dem Aufnahmetank 1 platziert ist. Das Saugrohr 17 verläuft dabei in zweckmäßiger Weise zum Teil oberhalb des Führunigsabschnitts 2 über diesem, steht dort also demgegenüber nicht seitlich vor.

Ferner ist vorgesehen, dass an der Seitenwandung 14 der Filtertrommel 9 ein mit Strahlöffnungen versehenes Rohr 20 festgelegt ist, dessen freies Ende im Bereich der Filtertrommel 9 geschlossen ist. Dieses Rohr 20 dient dazu, gereinigtes Kühlwasser strahlartig gegen die Bespannung der Filtertrommel 9 zu leiten, um die Bespannung 10 von innen her anzustrahlen und auf der Außenseite der Filtertrommel 9 sitzende Verschmutzungen zu lösen.

### Bezugszeichenliste

- 1: Aufnahmetank
- 2: Führungsabschnitt
- 3: Abgabeabschnitt
- 4: Kratzerkette
- 5: Zahnrad
- 6: Kurbelzapfen
- 7: Schubstange
- 8: Klinkenrad
- 9: Filtertrommel
- 10: Bespannung
- 11: Abdeckelement
- 12: Wange
- 13: Innenfläche
- 14: Wandung
- 15: Gehäusewand
- 16: Anschlussstück
- 17: Saugrohr
- 18: Saugpumpe (Saugelement)
- 19: Sammelbehälter
- 20: Rückspülrohr

## Patentansprüche

1. Vorrichtung zur Aufnahme und Trennung von an Werkzeugmaschinen anfallenden Spänen und Kühlflüssigkeit, wobei die Kühlflüssigkeit zum Wiedereinsatz zurückgeführt und die Späne abgeführt werden,
mit einem Aufnahmetank (1) zur Aufnahme der Späne und der Kühlflüssigkeit,
einem sich an den Aufnahmetank (1) anschließenden ansteigenden Führungsabschnitt (2),
einem sich an den Führungsabschnitt (2) anschließenden erhöhten Abgabeabschnitt (3),
einem kettenartigen geschlossenen Transportelement (4), welches zumindest in dem die Späne und die Kühlflüssigkeit aufnehmenden Bereich sowie in dem Abgabeabschnitt (3) über Umlenkelemente geführt ist, von denen mindestens eines mit einem Drehantrieb gekoppelt ist,
einer drehbar gelagerten Filtertrommel (9), welche mit dem Transportelement in Antriebsverbindung steht
und einer erhöht angeordneten Pumpe (18) mit Saugleitung (17),
**dadurch gekennzeichnet, dass** im unteren Bereich der drehbaren Filtertrommel (9) innerhalb dieser Trommel ein zu deren Achse parallel verlaufendes, umgekehrt trogartiges Abdeckelement (11) ortsfest angeordnet ist, das sich zumindest über einen Teil der Länge der Filtertrommel (9) erstreckt,
dass die Seitenwangen (12) des Abdeckelements (11) eng an die Innenfläche der Filtertrommel heranreichen und
dass in der Wandung des Trommelgehäuses ein Durchbruch vorgesehen ist, über welchen an einem Ende des Abdeckelements (11) eine dichte Verbindung zwischen dem Bereich unterhalb des Abdeckelements und der Saugleitung (17) gebildet wird, wobei der Durchbruch an die Saugleitung (17) angeschlossen ist, die mit der höher angeordneten Pumpe (18) in Verbindung steht, welche in einen Sammeltank (19) fördert.

2. Vorrichtung nach Anspruch 1, **dadurch gekennzeichnet, dass** das Saugelement einen Venturieinsatz hat.

3. Vorrichtung nach einem der vorhergehenden Ansprüche, **dadurch gekennzeichnet, dass** das Abdeckelement (11) unterhalb der Achse der Filtertrommel (9) parallel zu dieser verläuft.

4. Vorrichtung nach einem der vorhergehenden Ansprüche, **dadurch gekennzeichnet, dass** der Durchbruch in der einen Wandung (14) der Filtertrommel (9) zentrisch zu dem Profil des Abdeckelements (11) angeordnet ist.

5. Vorrichtung nach einem der vorhergehenden Ansprüche, **dadurch gekennzeichnet, dass** oberhalb der Achse der Filtertrommel (9) ein Rückspülrohr (20) verläuft, das durch die Wandung (14) der Filtertrommel dichtend hindurch geführt und an eine Pumpe angeschlossen ist.

## Claims

1. Device for holding and separating chippings and cooling liquid accumulating on machine tools, the cooling liquid being returned for reuse and the chippings being removed,
comprising a holding tank (1) for holding the chippings and the cooling liquid,
a rising guide section (2), adjoining the holding tank (1),
an elevated discharge section (3), adjoining the guide section (2),
a chain-like closed conveying element (4), which is guided over return elements, at least in the region holding the chippings and the cooling liquid and in the discharge section (3), at least one of which elements is coupled to a rotary drive,
a rotatably mounted filter drum (9), which is in drive connection with the conveying element,
and a pump (18) which is arranged at a higher level and has a suction line (17),
**characterized in that** an invertedly trough-like covering element (11), which runs parallel to the axis of said filter drum (9) and extends at least over part of the length of the latter, is fixedly arranged in the lower region of the rotatable filter drum (9) within the latter,
**in that** the side walls (12) of the covering element (11) reach close to the inner surface of the filter drum, and
**in that** an opening via which a sealing connection is formed between the region beneath the covering element and the suction line (17) at one end of the covering element (11) is provided in the wall of the drum housing
the opening being connected to the suction line (17), which is in connection with the pump (18), which is arranged at a higher level and discharges into a collection tank (19).

2. Device according to Claim 1, **characterized in that** the suction element has a venturi insert.

3. Device according to one of the preceding claims, **characterized in that** the covering element (11) runs under the axis of the filter drum (9) parallel to the latter.

4. Device according to one of the preceding claims, **characterized in that** the opening in one wall (14) of the filter drum (9) is arranged centrally in relation to the profile of the covering element (11).

5. Device according to one of the preceding claims, **characterized in that** a backflush tube (20), which is led through the wall (14) of the filter drum in a sealing manner and is connected to a pump, runs above the axis of the filter drum (9).

## Revendications

1. Dispositif pour recueillir et séparer des copeaux et du liquide de refroidissement provenant de machines-outils, le liquide de refroidissement étant recyclé en vue d'une réutilisation et les copeaux étant évacués,
comprenant un réservoir de collecte (1) pour recueillir les copeaux et le liquide de refroidissement,
une portion de guidage montante (2) se raccordant au réservoir de collecte (1),
une portion de déchargement rehaussée (3) se raccordant à la portion de guidage (2),
un élément de transport fermé de type chaîne (4) qui est guidé par le biais d'éléments de déviation au moins dans la région recueillant les copeaux et le liquide de refroidissement ainsi que dans la portion de déchargement (3), dont au moins l'un est accouplé à un entraînement en rotation,
un tambour de filtre (9) monté à rotation, qui est en liaison d'entraînement avec l'élément de transport
et une pompe (18) rehaussée avec une conduite d'aspiration (17),
**caractérisé en ce que** dans la région inférieure du tambour de filtre rotatif (9) est disposé, à l'intérieur de ce tambour, un élément de recouvrement (11) en forme d'auge inversée s'étendant parallèlement à l'axe du tambour, qui s'étend au moins sur une partie de la longueur du tambour de filtre (9),
**en ce que** les parois latérales (12) de l'élément de recouvrement (11) s'étendent tout contre la surface interne du tambour de filtre et
**en ce que** dans la paroi du boîtier de tambour est prévu un orifice qui forme à une extrémité de l'élément de recouvrement (11) une connexion étroite entre la région sous l'élément de recouvrement et la conduite d'aspiration (17), l'orifice étant raccordé à la conduite d'aspiration (17) qui est en liaison avec la pompe (18) disposée plus haut, qui conduit dans un réservoir de collecte (19).

2. Dispositif selon la revendication 1, **caractérisé en ce que** l'élément d'aspiration est un insert de type Venturi.

3. Dispositif selon l'une quelconque des revendications précédentes, **caractérisé en ce que** l'élément de recouvrement (11) s'étend sous l'axe du tambour de filtre (9) parallèlement à celui-ci.

4. Dispositif selon l'une quelconque des revendications précédentes, **caractérisé en ce que** l'orifice est disposé dans l'une des parois (14) du tambour de filtre (9) de manière centrée par rapport au profil de l'élément de recouvrement (11).

5. Dispositif selon l'une quelconque des revendications précédentes, **caractérisé en ce qu'**un tube de rinçage à contre-courant (20) s'étend au-dessus de l'axe du tambour de filtre (9), est guidé étroitement à travers la paroi (14) du tambour de filtre et est raccordé à une pompe.
